Europäisches Patentamt

European Patent Office

Office européen des brevets

(19)

(11) Publication number : **0 465 114 A1**

## (12) EUROPEAN PATENT APPLICATION

(21) Application number : 91305800.4

(22) Date of filing : 26.06.91

(51) Int. Cl.⁵ : **A01N 63/00,** A01N 63/04,
// (A01N63/00, 61:00, 25:34),
(A01N63/04, 61:00, 25:34)

(30) Priority : 27.06.90 GB 9014313

(43) Date of publication of application :
08.01.92 Bulletin 92/02

(84) Designated Contracting States :
AT BE CH DE DK ES FR GB GR IT LI LU NL SE

(71) Applicant : BIOLOGICAL CROP PROTECTION
LIMITED
Acorn Nurseries, Chapel Lane
West Wittering, Chichester PO20 8QG (GB)

(72) Inventor : Walker, Ian Philip, Acorn Nurseries
Chapel Lane, West Wittering
Chichester, West Sussex PO20 8QG (GB)

(74) Representative : Bridge-Butler, Alan James et
al
G.F. REDFERN & CO. Marlborough Lodge 14
Farncombe Road
Worthing West Sussex BN11 2BT (GB)

(54) Improvements relating to pest control.

(57)   There is described a method of controlling
pest insects in an agricultural or horticultural
crop, the method comprising the provision in or
adjacent the crop of virulent colonies of a fun-
gal, viral, or bacterial pathogen, associated with
means to attract the insects to the colonies. The
means of attracting insects may be an area of a
bright colour, such as yellow, associated with
the colony, or a chemical attractant may be
used.

EP 0 465 114 A1

The present invention relates to a method of pest control in horticulture and agriculture, and is particularly effective for the control of pests in glasshouse crops.

Known methods of controlling glasshouse crop pests include the use of chemical pesticides to kill the pests, and the use of parasitic insects to parasitise the pest insects and thus control their population.

Control of pests by the use of insecticidal pathogens such as fungi has hitherto been attempted by means of spraying or otherwise dispersing fungal spores over a crop canopy, in order to infect insects in the crop. This has proved to be inefficient, since the crop canopy presents a hostile environment for the fungal spores and their effective infectious dwell time within the canopy is limited.

In order to maintain the required level of protection in the crop, frequent reapplication of the fungal spores is necessary, and thus the method is both labour intensive and expensive.

The present invention seeks to overcome the difficulties of the prior art, by providing a method of fungal or pathogenic pest control which has a longer-lasting effect and requires smaller volumes of pathogens to be effective.

The present invention relates to a method of controlling agricultural or horticultural pests by using a pathogen, the pathogen being delivered to the pest insects by attracting the pest insects to a location where a substantially self-sustaining population of the pathogen is located so that the previously healthy pest insects become infected with the pathogen.

The pest insects are preferably encouraged to remain at the infection location for an extended period so as to maximise the chance of infection.

After attraction to the infection site, the infected pest insects disperse through the crop and carry the infection to other insects in the crop.

The preferred method of attracting the healthy insects to the pathogen locations is by arranging for the pathogen locations to be supported on brightly coloured substrates which are attractive to insects. By using differently coloured substances, a degree of selectivity in the type of insects attracted can be achieved, in that different insects are more strongly attracted to different colours.

It is also possible to use attractant chemicals such as pheromones, plant extracts or pollen, either alone or in combination with brightly coloured attractive substrates, to attract the insects to the sites. The use of chemical 'arresters' at the infection sites can prolong exposure times of insects at the sites, by encouraging the insect to stay at the site for an extended period.

In the preferred method, a number of insects infected with the pathogen are located on a brightly coloured substrate such as by using a bonding agent, and the substrate is then placed in the affected area.

The pathogen may be fungal, viral, or bacterial.

An example of the method of the present invention, and an exemplary apparatus used in its execution, will now be described in detail with reference to the use of a fungal pathogen.

In order to prepare an attractive infectious substrate, a substrate such as a card of a colour attractive to insects, for example bright yellow, white, or blue, is provided with a number of sources of nutrient for the selected pathogen. These sources may be either the bodies of insects which have already succumbed to the pathogen, or may be nutrients such as agar applied to the card in selected areas. If nutrient alone is applied to the card, the nutrient must thereafter be infected with the pathogen in order that growth of the pathogen may be promoted.

When the card has been provided with infected sources of pathogen nutrient, the card is placed in a growth-promoting environment in order that the numbers of pathogens present on the card should multiply. In the case of bacterial or viral pathogens, this simply means a multiplication in the numbers of viruses or bacteria present. In the case of a fungal pathogen, growth is promoted in order that the fungus should reach sporulation and fungal spores should be available on the card. The card may also include a hygroscopic substance either in the card or as a coating thereon, in order to absorb water from the atmosphere. This creates, in use, a microclimate in the vicinity of the card with a relatively high humidity, and promotes sporulation of fungi.

The card is then suspended in or adjacent to the crop and insects are attracted to the card from the crop. Contact with the pathogens on the card will infect the insects arriving from the crop, and thus will control their population.

While the substrate has been referred to above as a 'card', it should be understood that any brightly coloured carrier will perform the attraction function. Thus the substrate may be of any suitable material such as plastics, paper, etc and may have any convenient shape.

While it has been found that bright yellow is a colour almost universally attractive to insects, blue substrates have been seen to be particularly effective in attracting thrips. It is also possible to introduce selectivity of attraction by placing at the infection sites quantities of foods preferred by the insects it is desired to attract.

The present method has particular advantage in the control of insects which take refuge in relatively inaccessible parts of the crop, such as insects which conceal themselves inside flowers or in other enclosed areas of the crop plants. Pesticide spraying often fails to penetrate to such insects, and the population is again able to build after an application of pesticide since sufficient of the insects escape the effects of the pesticide. Using the method of the present invention, such insects will emerge from their places of concealment, and will be attracted towards the pathogen sources arranged adjacent the crop. After becoming infected with the pathogen, the insects will return to their places of concealment which in their turn become infected with the pathogen. Insects which subsequently conceal themselves in the same part of the crop will thereafter become infected, and population numbers of the pest insects will continue to drop.

Since the pathogens can be selected so as to be specific for the type of pest to be controlled, then beneficial insects such as bees active in pollenating the crop can be substantially unaffected by the pest control method. The method is intended to control such pests as whitefly, aphids, thrips and leaf miner, but specific pathogens may be used to control other types of pest. An example of a fungal pathogen for use in the method is verticillium lecanii, for the control of trialeurodes vaporariorum. Other suitable fungi are aschersonia sp and metarhyzium sp. Examples of viral and bacterial pathogens are granulosis virus and bacillus thuringiensis, for the control of lepidopterous species.

The method is applicable both to crops grown under glass and crops grown in the open.

## Claims

1. A method of controlling agricultural or horticultural pest insects by the use of a pathogen, comprising the steps of providing a substantially self-sustaining population of an insect pathogen at an infection location within or adjacent an affected crop, and providing means to attract pest insects to the infection location.

2. A method according to Claim 1, wherein the pest insects are attracted by an area of bright colour associated with the infection location.

3. A method according to Claim 2, wherein the pathogen population is arranged on a brightly coloured substrate.

4. A method according to Claim 2 or Claim 3, wherein the colour is yellow, blue or white.

5. A method according to Claim 1, wherein the means to attract the pest insects to the location is an attractant chemical such as a pheromone, a plant extract, or an insect food.

6. A method according to any preceding Claim, wherein the pathogen is a fungus.

7. A method according to Claim 6, wherein the pathogen is verticillium lecanii.

8. A method according to Claim 5 or Claim 7, wherein a substrate is provided with a fungal pathogen nutrient, the nutrient is infected with the fungal pathogen, the infected nutrient is then incubated to produce a sporulating colony of fungus and the colony is then placed at the infection location.

9. A method according to Claim 8, wherein the fungal nutrient is agar.

10. A method according to Claim 8, wherein the fungal nutrient comprises insect corpses.

11. A method according to any of Claims 1 to 5, wherein the pathogen is a virus.

12. A method according to any of Claims 1 to 5, wherein the pathogen is bacterial.

European Patent Office

**EUROPEAN SEARCH REPORT**

Application Number

EP 91 30 5800

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DERWENT CHEMICAL PATENTS INDEX, DOCUMENTATION ABSTRACTS JOURNAL, section C: AGDOC, week 8944, 3rd January 1990, C03, accession 89-319041/44, Derwent Publications Ltd, London, GB; & JP-A-01 235 532 (NITTO DENKO CORP.) 20-09-1989 * Abstract * | 1-10 | A 01 N 63/00 A 01 N 63/04 // (A 01 N 63/00 A 01 N 61:00 A 01 N 25:34 ) (A 01 N 63/04 A 01 N 61:00 A 01 N 25:34 ) |
| X | FR-A-2 449 401 (SANDOZ S.A.) * Page 1, line 1 - page 2, line 29; examples; claims * | 1,5,11, 12 | |
| X | BE-A- 659 040 (KOPPERS CO., INC.) * Page 4, lines 16-32; page 6, lines 1-13; claims * | 1,5,6, 12 | |
| X | BE-A- 674 909 (INSTITUT PASTEUR) * Page 4, line 27 - page 5, line 8; example; claims * | 1,5,6 | |
| X | WO-A-9 010 389 (ECOSCIENCE LABORATORIES, INC.) * Page 4, lines 1-34; examples; claims * | 1,5,6,8 -10 | **TECHNICAL FIELDS SEARCHED (Int. Cl.5)** A 01 N |
| X | JOURNAL OF ECONOMIC ENTOMOLOGY, vol. 67, no. 3, June 1974, pages 415-417; J.H. PATTI et al.: "Bacillus thuringiensis investigations for control of Heliothis spp. on cotton" * Whole document * -/- | 1,5,12 | |

The present search report has been drawn up for all claims

| Place of search | Date of completion of the search | Examiner |
|---|---|---|
| THE HAGUE | 02-10-1991 | DONOVAN T.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

**European Patent Office**

# EUROPEAN SEARCH REPORT

Application Number

EP 91 30 5800

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JOURNAL OF ECONOMIC ENTOMOLOGY, vol. 75, no. 6, December 1982, pages 1114-1119, College Park, Maryland, US; D.L. HOSTETTER et al.: "Laboratory evaluation of adjuvants for use with Baculovirus heliothis virus" * Whole document * | 1,5,11 | |
| X | JOURNAL OF ECONOMIC ENTOMOLOGY, vol. 70, no. 4, August 1977, page 469; T.J. SHAPAS et al.: "Population suppression of Trogoderma glabrum by using pheromone luring for protozoan pathogen dissemination" * Whole document * | 1,5 | |
| X | US-A-4 925 663 (J.L. STIMAC) * Examples; claims * | 1,5,6,8 | |
| X | GB-A-   28 066 (E.M. HESSE)(A.D.1912) * Page 2, line 40 - page 3, line 8; page 3, lines 44-46; claims * | 1,5,6,8 | TECHNICAL FIELDS SEARCHED (Int. Cl.5) |
| X | DERWENT CHEMICAL PATENTS INDEX, DOCUMENTATION ABSTRACTS JOURNAL, section C: AGDOC, week 8942, 13th December 1989, C03, accession no. 89-305470/42, Derwent Publications Ltd, London, GB; & JP-A-01 226 804 (WATANABE SANGYO K.K.) 11-09-1989 * Abstract * | 1,5,12 | |
| A | GB-A-2 174 907 (MINISTER FOR AGRICULTURE, FISHERIES & FOOD, UK) | | |
| A | GB-A-2 018 593 (UNILEVER LTD) | | |

The present search report has been drawn up for all claims

| Place of search | Date of completion of the search | Examiner |
|---|---|---|
| THE HAGUE | 02-10-1991 | DONOVAN T.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (T0401)